# EUROPEAN PATENT APPLICATION

(11) **EP 4 379 896 A1**
(43) Date of publication of application: **05.06.2024**
(21) Application number: 23209626.3
(22) Date of filing: 14.11.2023
(51) Int. Cl.: H01M 10/0587, H01M 50/536, H01M 50/528

(54) **POSITIVE ELECTRODE FOR LITHIUM-ION BATTERY, BATTERY CORE, AND LITHIUM-ION BATTERY**

(30) Priority: 30.11.2022 CN 202211530075
(71) Applicant: Eve Energy Co., Ltd., Huizhou, Guangdong 516006 (CN)
(72) Inventor: WANG,, Yuhua, Huizhou, Guangdong (CN); LIU, Rongjiang, Huizhou, Guangdong (CN); HUANG, Binbin, Huizhou, Guangdong (CN)
(74) Representative: Murgitroyd & Company

(57) **Abstract**

A positive electrode for a lithium-ion battery is provided. Opposite cleaning regions are provided respectively on opposite sides of the positive electrode in a thickness direction thereof for welding with a welding end of a tab. A notch is formed on a side of the cleaning regions close to an edge of the positive electrode in a width direction thereof. The notch penetrates the positive electrode in the thickness direction and a part of the tab which is corresponding to the notch in a width direction of the positive electrode is a matching part, the matching part is enabled to be provided in the notch. D1 is greater than D2, where D1 represents a dimension of a part of the cleaning regions intersecting an edge of the notch in a length direction of the positive electrode, and D2 represents a maximum dimension of the notch in the length direction.

## Description

### TECHNICAL FIELD

The present invention relates to the field of battery electrode technologies, for example, a positive electrode for a lithium-ion battery, a battery core, and a lithium-ion battery.

### BACKGROUND

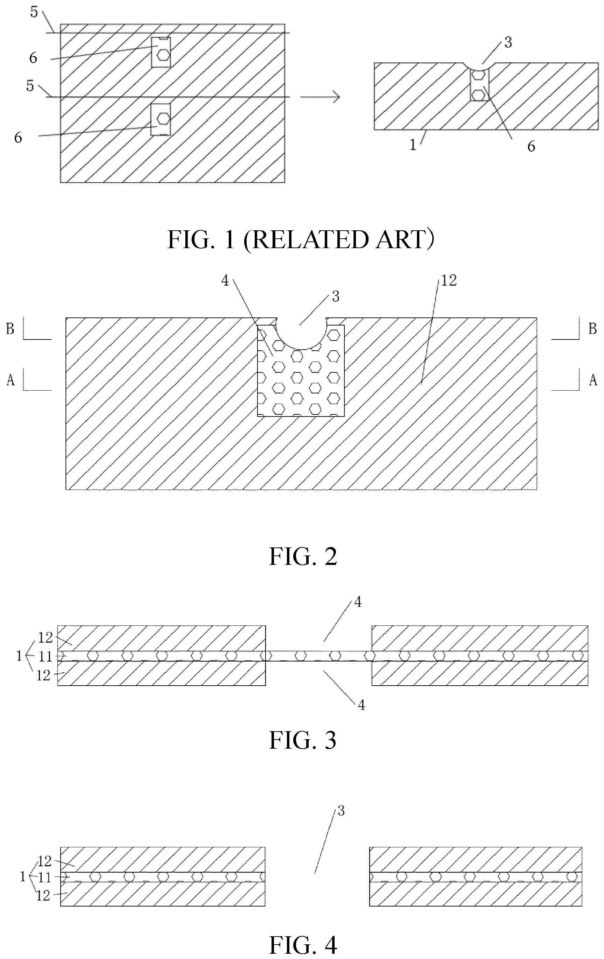

In order to improve the charging speed of existing commercial Computer-Communication-Consumer (3C) lithium-ion batteries in related art, the tabs are usually placed in cleaning regions in middle portions of electrodes of the 3C lithium-ion battery. Main methods for mass production of positive electrodes are shown in FIG. 1. A material region on a current collector is first cleaned at a designated position on a large electrode (i.e., a whole electrode without being cut) to obtain multiple tab grooves 6 transverse to the electrode, and only the current collector is remained in the tab grooves 6. Then, rolling is carried out and the cutting is performed at a cutting position 0-5 mm from a side edge of each tab groove 6. The cutting line 5 in FIG. 1 indicates the cutting position, which is located at an outer side of the tab groove 6, to obtain a stripped electrode 1. Afterwards, the remaining coating material on the side of the tab groove 6 is removed by punching to form a notch 3. There is no current collector or material region in the notch 3. Therefore, the current mass-produced products in the market all have notches on the positive tabs. If the notch 3 is not punched, the residual material region at an un-punched portion where the notch on the welded tab 3 is located and the welded tab 3, will have superimposed thicknesses to have thicker thicknesses, thereby affecting electrodeposition (ED). So, mass-produced products have notches on the tabs.

The positive electrode in the related art has the following problems. After the above-formed positive electrode is wound to form a square battery, the notch 3 at edges of the square battery will cause an uneven thickness of the part, which corresponds to the notch 3, of the square battery to be more serious compared with a case where the notch 3 is not punched, and this part that corresponds to the notch 3 is affected to be formed and bonded. So, the lithium precipitation is prone to occur in the cycling process.

### SUMMARY

The object of the present invention is to provide a positive electrode of a lithium-ion battery, an electrode core and a lithium-ion battery, so as to avoid the following problems that the positive electrode is wound to form a square battery, the notch at the edges of the square battery causes an uneven thickness of the part, which corresponds to the notch, of the square battery to be more serious compared with a case where the notch is not punched to affect this part that corresponding to the notch to be formed and bonded as well as further result in easily occurring the lithium precipitation in the cycling process.

In a first aspect, a positive electrode of a lithium-ion battery is provided and includes opposite cleaning regions are provided respectively on opposite sides of the positive electrode in a thickness direction of the positive electrode for welding with a welding end of a tab; a notch is formed on a side of the cleaning regions close to an edge of the positive electrode in a width direction of the positive electrode, and the notch penetrates the positive electrode in the thickness direction and a part of the tab which is corresponding to the notch in a width direction of the positive electrode is a matching part, the matching part is enabled to be provided in the notch; and D 1 is greater than D2, where D 1 represents a dimension of a part of the cleaning regions intersecting an edge of the notch in a length direction of the positive electrode, and D2 represents a maximum dimension of the notch in the length direction.

In some embodiments, a minimum dimension of the matching part in the length direction ranges from 2mm to 12mm.

In some embodiments, D1 ranges from 8mm to 30mm.

In some embodiments, D2 ranges from 4mm to 29mm.

In some embodiments, a cross section of the notch along the width direction appears as an arc-shaped opening facing outward.

In some embodiments, the arc-shaped opening shape may have a superior arc shape.

In some embodiments, a shape of the cleaning region may be rectangular, circular or trapezoidal.

In a second aspect, an electrode core is provided and may include a negative electrode, a separator, and the positive electrode of a lithium-ion battery as described above, in which the negative electrode, the separator, and the positive electrode of the lithium-ion battery are stacked and wound into a square winding body.

In a third aspect, a lithium-ion battery is provided and may include the above-mentioned electrode core.

The present invention has the following advantageous effects.
1. According to the positive electrode of the lithium-ion battery in some embodiments of the present invention, the tab may be normally arranged in the notch and the cleaning region, so that the tab may be welded normally in the cleaning region. When the dimensions of the cleaning region along the length direction of the positive electrode are ensured to be the same, there is a part of the material region on a side of the cleaning region close to the notch, by reducing the dimension of the punched notch in the length direction of the positive electrode, so that uneven-thickness regions of the whole positive electrode are decreased. When the battery is formed, the formation and bonded effect thereof is good, and the gap between the separator and the positive electrode is smaller. During the cycling process, there is no problem in that the gap in the local regions is enlarged and the impedance is increased, thereby alleviating the risk of lithium precipitation of the negative electrode in the later period of the cycling process of the battery.
2. According to the positive electrode of the lithium-ion battery in some embodiments of the present invention, the minimum dimension, which is in the length direction of the positive electrode, of the part (i.e., matching part) of the tab corresponding to the notch along the width direction of the positive electrode is 2mm-12mm. In this way, a small loss of energy density and a good heat dissipation effect of the battery may be simultaneously considered. The part of the cleaning region intersecting an edge of the notch has the dimension of 8mm-30mm along the length direction of the positive electrode. So, a small loss of energy density and a suitable dimension of the welding region of the tab may be simultaneously considered, so that the tab is avoided to be too narrow, the difficult processing of the tab is also avoided, and heat dissipation of the battery is further avoided to be affected. The maximum dimension of the notch along the length direction of the positive electrode is 4mm-29mm, so that a higher flatness may be considered at the same time without affecting the normal welding of the tab, thereby reducing the risk of lithium precipitation of the negative electrode in the later period of the cycling process of the battery. And, it may firstly consider a minimum dimension, which is in the length direction of the positive electrode, of a part (i.e., matching part) of the tab corresponding to the notch along the width direction of the positive electrode; secondly consider a dimension of a part of the cleaning region intersecting an edge of the notch along the length direction of the positive electrode; and finally consider a maximum dimension of the notch along the length direction of the positive electrode.
3. According to the electrode core in some embodiments of the present invention, the positive electrode of the lithium-ion battery is used, and the tab may be normally arranged in the notch and the cleaning region, so that the tab can be welded normally in the cleaning region. When the dimensions of the cleaning region along the length direction of the positive electrode are ensured to be the same, there is a part of the material region on a side of the cleaning region close to the notch, by reducing the dimension of the existing punched notch in the length direction of the positive electrode, so that uneven-thickness regions of the whole positive electrode are decreased. When the battery is formed, the formation and bonded effect thereof is good, and the gap between the separator and the positive electrode is smaller. During the cycling process, there is no problem in that the gap in the local regions is enlarged and the impedance is increased, thereby alleviating the risk of lithium precipitation of the negative electrode in the later period of the cycling process of the battery.
4. According to the lithium-ion battery in some embodiments of the present invention, the battery adopts the above electrode core, and the electrode core adopts the above positive electrode of the lithium-ion battery. When the battery is formed, the tab can be normally arranged in the notch and the cleaning region, so that the tab can be welded normally in the cleaning region. When the dimensions of the cleaning region along the length direction of the positive electrode are ensured to be the same, there is a part of the material region on a side of the cleaning region close to the notch, by reducing the dimension of the punched notch in the length direction of the positive electrode, so that uneven-thickness regions of the whole positive electrode are decreased. Further, the formation and bonded effect of the battery is good, and the gap between the separator and the positive electrode is smaller. During the cycling process, there is no problem in that the gaps in the local regions are enlarged and the impedance is increased, thereby alleviating the risk of lithium precipitation of the negative electrode in the later period of the cycling process of the battery.

### BRIEF DESCRIPTION OF THE DRAWINGS

FIG. 1 is a schematic view of a process of manufacturing a positive electrode in the related art.
FIG. 2 is a schematic structural diagram of a positive electrode for a lithium-ion battery according to some embodiments of the present invention.
FIG. 3 is a schematic sectional view taken along line A-A in FIG. 2.
FIG. 4 is a schematic sectional view taken along line B-B in FIG. 2.
FIG. 5 is a schematic diagram showing a state in which a tab is welded to the positive electrode for the lithium-ion battery according to some embodiments of the present invention.
FIG. 6 is a schematic diagram showing the state in which the tab is welded to the positive electrode for the lithium-ion battery, with dimension marks.
FIG. 7 is a schematic diagram showing another state in which a tab is welded to the positive electrode for the lithium-ion battery according to some embodiments of the present invention.
FIG. 8 is another schematic sectional view of a notch in the positive electrode for the lithium-ion battery according to some embodiments of the invention.

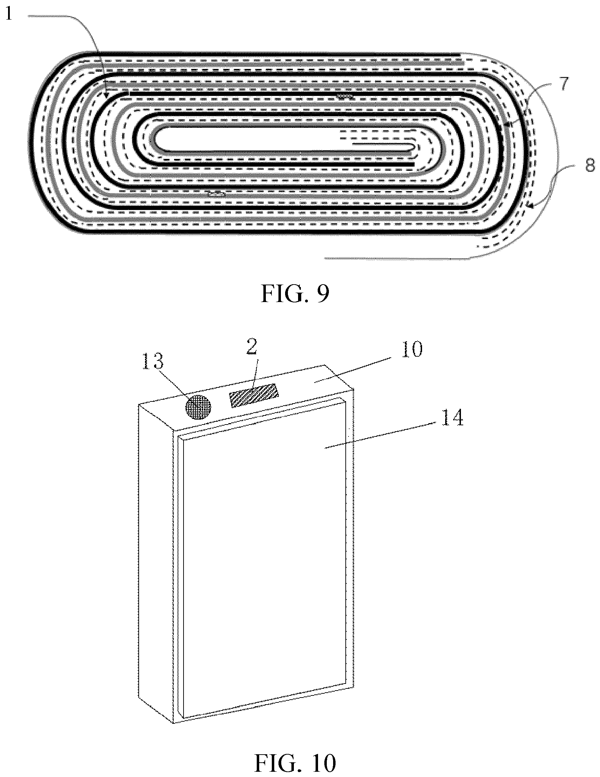

FIG. 9 is a schematic structural diagram of a battery core according to some embodiments of the present invention.
FIG. 10 is a schematic structural diagram of a lithium-ion battery according to some embodiments of the present invention.

List of reference signs in the drawings: 1-positive electrode; 11-current collector; 12-material region; 2-tab; 21-welding end; 22-matching part; 3-notch; 4-cleaning region; 5-cutting line; 6-tab groove; 7-negative electrode; 8-separator; 10-square housing; 13-cap; 14-battery core.

### DETAILED DESCRIPTION

### Example 1

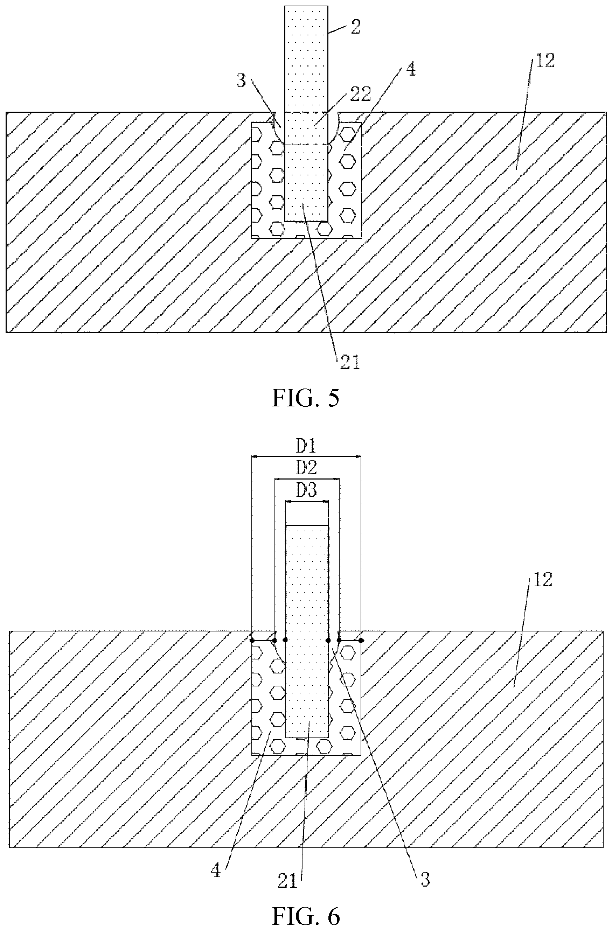

In this example, a positive electrode 1 for a lithium-ion battery is provided. Referring to FIGS. 2 to 5, opposite cleaning regions 4 provided on two sides of the positive electrode 1 in a thickness direction of the positive electrode 1. The cleaning regions 4 are configured for welding a welding end 21 of the tab 2. Portions of the cleaning regions 4 which are each close to a side of the positive electrode 1 in a width direction of the positive electrode 1 have a notch 3. The notch 3 penetrates through the positive electrode 1 along a thickness direction of the positive electrode 1. A part of the tab which is corresponding to the notch in a width direction of the positive electrode is a matching part, the matching part is enabled to be provided in the notch. A dimension of a part of the cleaning region 4 intersecting an edge of the notch along a length direction of the positive electrode 1 is denoted by D1. And, a maximum dimension of the notch 3 along the length direction of the positive electrode 1 is denoted by D2. D2 is less than D1, as shown in FIG. 6.

In this example, taking FIG. 2 as an example, a left-right direction in FIG. 2 is a length direction of the positive electrode 1. A upper-lower direction in FIG. 2 is a width direction of the positive electrode 1, and an inner-outer direction in FIG. 2 is a thickness direction of the positive electrode 1.

In this example, the cleaning region 4 corresponds to the tab groove in the related art, and the notch 3 corresponds to the notch in the related art. As shown in FIG. 3, the cleaning region 4 retains only the current collector 11 in a middle portion of the positive electrode 1 in the thickness direction of the positive electrode 1, and the material region 12 on two sides of the current collector 11 is cleaned. As shown in FIG. 4, the notch 3 penetrates directly through the entire positive electrode 1. That is, the current collector 11 and the material region 12 on two sides of the current collector 11 are cut away.

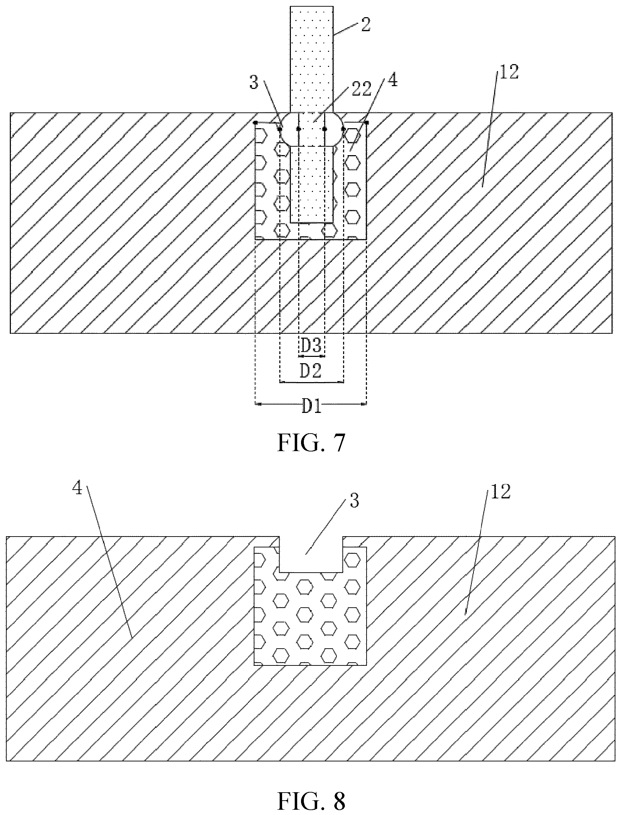

In this example, sectional shapes of the cleaning region 4 and the notch 3 may not be limited. Optionally, as shown in FIG. 2, the notch 3 has an arc-shaped opening shape in the thickness direction of the positive electrode 1, and an opening of the arc-shaped opening shape faces outwardly, i.e., towards an upper side of FIG. 2. In this way, generation of tip burrs during the punching operation may be avoided. Optionally, the arc-shaped opening shape is major arc, so that a part of the tab 2 which is corresponding to the notch 3 in the width direction of the positive electrode 1 may be provided in the notch 3. A maximum dimension of the notch 3 in the length direction of the positive electrode 1 is less than a dimension of a part of the cleaning region 4 intersecting an edge of the notch in the length direction of the positive electrode 1. In this configuration, as shown in FIG. 2 and FIG. 8, more material regions 12 are remained on an upper side of the cleaning region 4 as well as the left and right sides of the notch 3 in FIG. 2. So, the flatness of the positive electrode 1 is higher, so that the battery can be better formed and bonded, and the gap between the separator and the positive electrode is smaller. And, there does not cause the problem that the gaps in the local regions are enlarged and the impedance is increased during a cycling process, so as to better reduce the risk of lithium precipitation in the negative electrode in the later period of the cycling process of the battery. Of course, the notch 3 with the rectangular cross-section in FIG. 8 can also be used to better reduce the risk of lithium precipitation in the negative electrode in the later period of the cycling process of the battery, comparted with the related art.

In this example, a shape of the cleaning region 4 may be rectangular, circular or trapezoidal, and may be of other shapes. The shape configuration of the cleaning region 4 may avoid the cleaning region to have too small area to affect the welding effect of the tab. Optionally, as shown in FIG. 2, the cleaning region 4 is rectangular in cross-section, which is more convenient for the laser cleaning operation in comparison with other shapes, facilitates the welding of the tab 2, and enables the loss of energy density to be reduced.

In industry, the punched notch in related art is generally wider than the tab groove, and the punched notch is larger, thereby resulting in a location, which is corresponding to the punched notch, of a square core to decrease a thickness of a layer of electrode. So, the region, in which the punched notch 3 is located, has a decreased thickness on a surface of the square core and thus the square core is caused to have a poor flatness. When the battery is formed, the region, in which the punched notch 3 is located, has a decreased thickness, and the formation and bonding is poor, thereby resulting in an enlargement in a gap between the separator and the positive electrode. When the battery is charged and discharged, the gap between the separator and the positive electrode 1 is further enlarged due to repeated expansion and contraction of the positive electrode and the negative electrode, and the impedance of the region, in which the punched notch 3 is located, is increased. So, it is more difficult for the positive electrode and the negative electrode to deintercalate lithium, and the problem of lithium precipitation of the negative electrode in the later period of the cycling process is easily caused.

In the positive electrode for the lithium-ion battery according to this example of the present invention, a part of the tab 2 which is corresponding to the notch 3 in a width direction of the positive electrode 1 is a matching part. And, the matching part may be provided in the notch 3, that is, the tab may be normally provided in the notch 3 and the cleaning region 4. Accordingly, the normal welding of the tab 2 in the cleaning region 4 is ensured as shown in FIG. 5 and FIG. 8. The maximum dimension of the notch 3 in the length direction of the positive electrode 1 is less than the dimension of a part of the cleaning region 4 intersecting an edge of the notch in the length direction of the positive electrode 1. In this way, when the dimensions of the cleaning region 4 in a length direction of the positive electrode are ensured to be the same, a combination of a partial material region 12 on a side of the cleaning region close to the notch and the current collector 11 is not cut off, by reducing the dimension of the punched notch 3 in the length direction of the positive electrode. And, this partial material region 12 and the current collector 11 are extended to a side having a notch 3 (e.g., a left side or a right side of the notch 3 as shown in FIG. 5) of the positive electrode 1. So, uneven-thickness regions of the whole positive electrode are decreased, compared with the related art. When the battery is formed, the formation and bonded effect thereof is good, and the gap between the separator and the positive electrode is smaller. During the cycling process, there is no problem in that the gaps in the partial regions are enlarged and the impedance is increased, thereby alleviating the risk of lithium precipitation of the negative electrode in the later period of the cycling process of the battery.

In addition, in this example, some dimensions of the tab 2, the notch 3 and the cleaning region 4 of the positive electrode 1 are set.

As shown in FIG. 6 and FIG. 7, a part of the tab 2 which is corresponding to the notch 3 in the width direction of the positive electrode 1 is a matching part 22. The matching part 22 is a segment of a middle portion of the tab in a length direction of the tab 2, and the matching part 22 is located in a space of the notch 3. A minimum dimension of the matching part 22 in the length direction of the positive electrode 1 is denoted by D3 and has a suitable range of 2mm-12mm. As shown in FIG. 6 and FIG. 7, when the tab 2 is welded to the cleaning region 4, a minimum dimension of a part, which is located in the notch 3, of the tab 2 in the left-right direction is denoted by D3. In the dimension configure of the D3 in this example of the present invention, it can avoid that when D3 is too large, an area of the material region 12 is reduced, and the loss of energy density is higher. Also, it can avoid that when D3 is too small, the battery is difficult to dissipate heat.

A dimension of a part of the cleaning region 4 intersecting an edge of the notch along a length direction of the positive electrode 1 is denoted by D1 and has a suitable range of 8mm-30mm. As shown in FIG. 6, when a shape of the cleaning region 4 is rectangular, D1 denotes a dimension of the cleaning region 4 along the length direction of the positive electrode 1. In the dimension configure of this example of the present invention, it can avoid that when D1 is too large, the area of the material region is reduced and more energy density is lost. Also, it can avoid that when D 1 is too small, the welding region of the tab 2 is too small, and a dimension of the tab 2 is affected. If the tab 2 is too narrow, the manufacture of the tab is difficult, and the heat dissipation of the battery is affected.

A maximum dimension of the notch 3 along the length direction of the positive electrode 1 is denoted by D2 and has a suitable range of 4mm-29mm. As shown in FIG. 6, a shape of the notch 3 is arc and is a major arc. D2 denotes a diameter of a circle having the arc. In the dimension configure according to this example of the present invention, it can avoid that when D2 is too large, the flatness of a region, in which the notch 3 is located, of the battery is not good to affect the formation and bonding effect. So, the gap between the separator and the positive electrode is larger. During the cycling process, the problem that the gaps in the local regions are enlarged and the impedance is increased may also avoid to occur to increase the risk of lithium precipitation of the negative electrode in a later period of the cycling process of the battery. Further, it can avoid that when D2 is too small, the risk that the tab 2 coincides with the material region 12 is not prevented, so that a part of the tab 2 corresponding to the notch 3 in the width direction of the positive electrode 1 cannot be provided in the notch 3, thereby affecting the normal welding of the tab 2 in the cleaning region 4.

For the above dimensions, it may firstly consider a minimum dimension D3, which is in the length direction of the positive electrode 1, of the matching part; secondly consider a dimension D1 of a part of the cleaning region 4 intersecting an edge of the notch along the length direction of the positive electrode 1; and finally consider a maximum dimension D2 of the notch 3 along the length direction of the positive electrode 1. In this way, it is possible to ensure that the tab 2 itself is suitable in size. Further, first, a small loss of energy density and the good heat dissipation effect of the battery may be simultaneously considered; second, the small loss of energy density and a suitable dimension of the weld region of the tab 2 may be simultaneously considered so as to avoid the tab 2 to be too narrow, to avoid the manufacture of the tab to be difficult, and to avoid to affect the heat dissipation of the battery; third, the higher flatness without affecting the normal welding of the tab 2 may be simultaneously considered, thereby reducing the risk of lithium precipitation of the negative electrode in the later period of the cycling process of the battery.

With the positive electrode for the lithium-ion battery according to this example of the present invention, the dimension of the existing punched notch in the length direction of the positive electrode 1 is reduced in a case where the dimensions of the cleaning region 4 in the longitudinal direction of the positive electrode 1 are the same, whereas this has little effect on the difficulty in punching. The existing notch is usually punched from the positive electrode before this piece is manufactured, and the punching is usually performed pneumatically by using a clamping fixture for punching. In the present example, it is only necessary to adjust a dimension of a cutter of a punching device, and this dimension of the cutter is matched with the notch 3, so that the punching can be realized. The cutter with this dimension can be machined and used. For example, the cutter with a dimension of 6 mm can be machined. In addition, an operation procedure of manufacturing the positive electrode 1 includes a coating process, a cleaning process, a cold pressing process and a striping process. It is not ensured that the striping operation is sliced just along the edge of the cleaning region, so that a edge of the positive electrode 1 is left with a part of the material region after cutting. Therefore, the punching device is required. And, an operation procedure of the negative electrode includes a coating process, a cold pressing process, a cutting process, and a cleaning process. Because material-free regions at edges can be controlled in the cleaning process, the negative electrode does not need to punch a notch 3.

According to the positive electrode for the lithium-ion battery according to the present embodiments, the flatness of a part of the battery which is corresponding to the punched portion of the positive electrode 1 can be improved, by optimizing a punched shape or a punched size. And, the problem of lithium precipitation is less likely to occur in the cycling process because the flatness of the positive electrode 1 is higher, so as to improve the lithium precipitation problem of the battery. Moreover, without affecting the energy density of the battery at all, it is not difficult to add any manufacturing process, no additional equipment is required, and mass production is possible. Moreover, the foregoing detailed description of some examples of the present invention is not to be construed as limitation to the present invention.

### Example 2

In this example, a battery core 14 is provided, and includes a negative electrode 7, a separator 8 and the positive electrode 1 for the lithium-ion battery mentioned in Example 1. The negative electrode 7, the separator 8, and the positive electrode 1 for the lithium-ion battery are stacked and wound into a square winding body.

In the battery core of this example, the positive electrode for the lithium-ion battery is used, and the tab 2 can be normally arranged in the notch 3 and the cleaning region 4 to ensure the normal welding of the tab 2 in the cleaning region 4. In addition, when the dimensions of the cleaning region 4 along the length direction of the positive electrode 1 are ensured to be the same, there is a part of the material region 12 on a side of the cleaning region 4 close to the notch 3, by reducing the dimension of the existing punched notch along the length direction of the positive electrode 1, so that uneven-thickness regions of the whole positive electrode 1 are decreased. When the battery is formed, the formation and bonding effect thereof is good, and the gap between the separator and the positive electrode is smaller. During the cycling process, there is no problem in that the gaps in the local regions are enlarged and the impedance is increased, thereby alleviating the risk of lithium precipitation of the negative electrode in the later period of the cycling process of the battery.

### Example 3

In this example, a lithium-ion battery is provided, and includes a square housing 10, a cap 13, and the battery core 14 mentioned in Example 2, in which the square housing may be provided with a mounting groove, the battery core is arranged in the mounting groove, and an opening of the mounting groove is sealed by the cap.

In the lithium-ion battery of this example, the above battery core is adopted, and the battery core adopts the above positive electrode for the lithium-ion battery. When the battery is formed, the tab 2 may be normally arranged in the notch 3 and the cleaning region 4, so that the tab 2 may be welded normally in the cleaning region 4. When the dimensions of the cleaning region along the length direction of the positive electrode are ensured to be the same, there is a part of the material region 12 on a side of the cleaning region 4 close to the notch 3, by reducing the dimension of the existing punched notch along the length direction of the positive electrode 1, so that an uneven-thickness region of the whole positive electrode 1 is decreased. So, the formation and bonding effect of the battery is good, and the gap between the separator and the positive electrode is smaller. During the cycling process, there is no problem in that the gaps in the local regions are enlarged and the impedance is increased, thereby alleviating the risk of lithium precipitation of the negative electrode in the later period of the cycling process of the battery.

### Example 4

In this example, it is provided a lithium-ion battery including a square pouch battery. The pouch battery includes the above-mentioned winding body and an aluminum plastic film.

In the lithium-ion battery of this example, the above battery core is adopted, and the battery core adopts the above positive electrode for the lithium-ion battery. When the battery is formed, the tab 2 may be normally arranged in the notch 3 and the cleaning region 4, so that the tab 2 may be welded normally in the cleaning region 4. When the dimensions of the cleaning region along the length direction of the positive electrode are ensured to be the same, there is a part of the material region 12 on a side of the cleaning region 4 close to the notch 3, by reducing the dimension of the existing punched notch along the length direction of the positive electrode 1, so that an uneven-thickness region of the whole positive electrode 1 is decreased. So, the formation and bonding effect of the battery is good, and the gap between the separator and the positive electrode is smaller. During the cycling process, there is no problem in that the gaps in the local regions are enlarged and the impedance is increased, thereby alleviating the risk of lithium precipitation of the negative electrode in the later period of the cycling process of the battery.

## Claims

1. A positive electrode (1) for a lithium-ion battery, comprising:
opposite cleaning regions (4) provided respectively on opposite sides of the positive electrode (1) in a thickness direction of the positive electrode for welding with a welding end (21) of a tab (2); and
a notch (3) formed on a side of the cleaning regions (4) close to an edge of the positive electrode in a width direction of the positive electrode, wherein the notch (3) penetrates the positive electrode (1) in the thickness direction and a part of the tab (2) which is corresponding to the notch in a width direction of the positive electrode (1) is a matching part (22), the matching part is enabled to be provided in the notch;
wherein D1 is greater than D2, where D1 represents a dimension of a part of the cleaning regions (4) intersecting an edge of the notch in a length direction of the positive electrode (1), and D2 represents a maximum dimension of the notch (3) in the length direction.

2. The positive electrode according to claim 1, wherein a minimum dimension of the matching part (22) in the length direction ranges from 2mm to 12mm.

3. The positive electrode according to any one of claims 1 to 2, wherein D1 ranges from 8mm to 30mm.

4. The positive electrode according to any one of claims 1 to 3, wherein D2 ranges from 4mm to 29mm.

5. The positive electrode according to any one of claims 1 to 4, wherein a cross section of the notch (3) along the width direction appears as an arc-shaped opening facing outward.

6. The positive electrode according to claim 5, wherein the arc-shaped opening is of a major arc.

7. The positive electrode according to any one of claims 1 to 6, wherein each of the cleaning regions is rectangular, circular or trapezoidal.

8. A battery core (14), comprising:
a negative electrode (7);
a separator (8); and
the positive electrode (1) for the lithium-ion battery comprising according to any one of claims 1 to 8;
wherein the negative electrode (7), the separator (8), and the positive electrode (1) are stacked and wound into a square winding body.

9. A lithium-ion battery comprising the battery core (14) according to claim 8.
